# EUROPÄISCHE PATENTSCHRIFT

(11) **EP 1 453 876 B1**
(45) Veröffentlichungstag und Bekanntmachung des Hinweises auf die Patenterteilung: **07.03.2007**
(21) Anmeldenummer: 02779388.4
(22) Anmeldetag: 20.09.2002
(51) Int. Cl.: C08G 59/18, F16L 9/12

(54) **VERFAHREN ZUR HERSTELLUNG VON ROHREN AUS VERBUNDWERKSTOFFEN**
METHOD FOR THE PRODUCTION OF TUBES IN COMPOSITE MATERIALS
PROCEDE POUR PRODUIRE DES TUBES EN MATERIAUX COMPOSITES

(30) Priorität: 08.10.2001 DE 10149555
(43) Veröffentlichungstag der Anmeldung: 08.09.2004
(73) Patentinhaber: Huntsman Advanced Materials (Switzerland) GmbH, 4057 Basel (CH)
(72) Erfinder: SCHERZER, Wolfgang, 59192 Bergkamen (DE); VOLLE, Jörg, 59379 Selm-Bork (DE)
(74) Vertreter: Baruh, Colette
(86) Internationale Anmeldenummer: PCT/EP2002/010576
(87) Internationale Veröffentlichungsnummer: WO 2003/031493

(56) Entgegenhaltungen:
- EP-A- 0 375 992
- GB-A- 1 565 379
- GB-A- 2 136 317
- US-A- 3 474 056
- US-A- 5 707 702

## Beschreibung

Die Erfindung betrifft ein Verfahren zur Herstellung von Rohren und Rohrhilfsstücken aus Verbundwerkstoffen für Rohrleitungssysteme, insbesondere für Brauch- und Trinkwasser, hergestellt nach dem Wickelverfahren aus üblichen Einlagematerialien mit Bindemitteln auf Basis von Epoxidharzen und als Härterkomponente Addukte von Triethylentetraminimidazolinen mit Glycidylethern, die mehr als eine Epoxidgruppe pro Molekül enthalten.

Die heute noch überwiegend verwendeten Rohre aus Metallweisen hinsichtlich ihrer Eigenschaften eine Reihe von Mängeln auf, wie insbesondere hohes Gewicht und Korrosionsanfälligkeit. Jährlich sind immense Summen aufzuwenden für die Instandhaltung, Ausbesserung oder den Austausch von wasserführenden Rohren im Niedertemperaturbereich (Trinkwasser, Brauchwasser), insbesondere aber dort, wo Heisswasser oder Dampf zu- oder abgeleitet werden muss.

Es sind daher seit geraumer Zeit verstärkte Anstrengungen unternommen worden, die positiven Eigenschaften von faserverstärkten Kunstharzen für dieses Gebiet nutzbar zu machen, wie geringes Gewicht, gute Chemikalienbeständigkeit - unter Umständen auch gegen Lösungsmittel -, Anpassungsfähigkeit hinsichtlich konstruktionstechnischer Anforderungen, wirtschaftliche Herstellung gegenüber anderen korrosionsbeständigen Werkstoffen wie Glas, Metall, Email, geringer Wartungs- und Instandhaltungsaufwand.

Die Bestrebungen, die positiven Eigenschaften von faserverstärkten Kunstharzen auch für die Herstellung von Rohren zu nutzen, welche für die Förderung von Trink- und Brauchwasser bei höheren Temperaturen eingesetzt werden sollen, wurden daher weiter intensiviert.

Dabei zeigte sich, dass der kommerziellen Verwertung im Trinkwasserbereich neben einigen verarbeitungstechnischen Problemen, insbesondere die physiologische Bedenklichkeit der auf dem Wickelsektor üblichen Härtungsmittel entgegensteht.

Bei der Förderung von heissem Wasser oder Dampf bis ca. 120°C war nach relativ kurzer Zeit eine Verminderung des thermischen Eigenschaftsniveaus, z.B. beim Torsionsschwingversuch nach DIN 53 445, zu verzeichnen.

Durch die Verminderung des thermischen Eigenschaftsniveaus werden die konstruktionstechnischen Eigenschaften der faserverstärkten Verbundwerkstoffe zum Teil derart negativ beeinflusst, so dass sie für die obengenannten Anwendungen nicht eingesetzt werden können.

Ein Härter, der die gestellten physikalischen Eigenschaftsanforderungen aufweist, ist das 1-Amino-3,3,5 Trimethyl-5-aminomethyl-cyclohexan (Isophorondiamin).

Isophorondiamin ist aber ein Härter, welcher einige verarbeitungstechnische Nachteile aufweisst. Hier ist insbesondere hinzuweisen auf die kurze Verarbeitungszeit, die erforderliche hohe Härtungstemperatur, sowie physiologische Probleme.

Es hat daher in der Vergangenheit nicht an Versuchen gemangelt, Alternativhärter zu entwickeln, welche dem Isophorondiamin vergleichbare Eigenschaften in den gehärteten Harzen erzeugen und geringere physiologische Probleme verursachen.

Der Einsatz von Imidazoline auf Basis von Umsetzungsprodukten aus monomeren Fettsäuren und Polyethylenpolyaminen brachte zwar eine physiologische Unbedenklichkeit, jedoch keine ausreichende Beständigkeit gegenüber heissem Wasser, was aus dem starken Abfall der HDT-Werte (Heat distortion temperature) nach Lagerung im kochenden Wasser ablesbar ist.

Die Erfahrungswerte aus der Praxis zeigen, dass nicht nur die Imidazoline aus kurzkettigen Monocarbonsäuren, sondern überraschenderweise auch die Imidazoline aus den hydrophoben langkettigen monomeren und dimeren Fettsäuren grössere Mengen an Wasser aufzunehmen vermögen. Entsprechend ist der Abfall der HDT-Werte. Bei cycloaliphatischen Diaminen, wie Isophorondiamin ist dies nicht der Fall.

Nach allgemeiner Überzeugung sind Imidazoline als Härter für Epoxidharze daher nicht geeignet für Produkte, welche später einer Wasserbelastung ausgesetzt werden sollen.

Überraschenderweise wurde nun gefunden, dass Addukte von Triethylentetraminimidazolinen mit Glycidylethern, die mehr als eine Epoxidgruppe pro Molekül aufweisen, den gehärteten Epoxidharzen auf Basis von Bisphenol A und Bisphenol F sowohl physiologische Unbedenklichkeit als auch Beständigkeit gegenüber einer Dauerbelastung von heissem Wasser oder Heissdampf bis ca. 120°C verleiht. Darüber hinaus sind auch die verarbeitungstechnischen Eigenschaften verbessert, insbesondere konnte die offene Zeit auf praxisgerechte Zeiten verlängert werden.

Gegenstand der Erfindung ist daher ein Verfahren zur Herstellung von Rohren und Rohrhilfsstücken für Rohrleitungssysteme aus Verbundwerkstoff, insbesondere für Brauch- und Trinkwasser, hergestellt nach dem Wickelverfahren mit Bindemitteln auf Basis von Epoxidharzen, welche im Durchschnitt mehr als eine Epoxidgruppe im Molekül enthalten, und Härtungsmitteln für die Epoxidharze, unter Mitverwendung von üblichen Hilfs- und Zusatzstoffen, dadurch gekennzeichnet,
dass als Bindemittel eine härtbare Zusammensetzung, enthaltend
a) ein flüssiges Epoxidharz mit Epoxidwerten von 0,40 bis 0,65,
b) ein Addukt eines Triethylentetraminimidazolins mit einem Glycidylether der mehr als eine Epoxidgruppe pro Molekül aufweist, verwendet wird.

Die erfindungsgemäss mitverwendeten Epoxidharze a) sind Glycidylether mit im Durchschnitt mehr als einer Epoxidgruppe pro Molekül wie vorzugsweise die Glycidylether auf Basis von ein- oder mehrwertigen Phenolen. Erfindungsgemäss bevorzugt werden Glycidylether von 2,2-Bis(4-hydroxyphenyl)-propan (Bisphenol A) mit Epoxidwerten von 0,45 - 0,65, insbesondere die bei Raumtemperatur flüssigen Verbindungen mit Epoxidwerten im Bereich von 0,5 bis 0,61. Daneben haben sich auch die Glycidylether auf Basis von Bisphenol F und die Novolake als vorteilhaft erwiesen.

Die erfindungsgemässen Imidazolinaddukte b) werden hergestellt durch Kondensation von Triethylentetramin mit Carbonsäuren im Molverhältnis von bevorzugt 1:1. Es werden Carbonsäuren bevorzugt mit 2-4 C-Atomen, auch in Mischungen, insbesondere Essigsäure und/oder Propionsäure verwendet. Anschliessend werden die Imidazoline mit Glycidylethern, enthaltend mehr als eine Epoxidgruppe pro Molekül, adduktiert. Bevorzugt sind hier Bisphenol A und Bisphenol F-diglycidylether. Die Adduktierungshöhe hängt von den gewünschten anwendungstechnischen Eigenschaften sowie der gewünschten Viskosität des Imidazolinadduktes ab. Positive Eigenschaften werden in der Regel immer erzielt, wenn pro Mol der Imidazolinverbindung 0,05 bis 0,5, bevorzugt 0,1 bis 0,3, besonders bevorzugt 0,2 Epoxidäquivalent adduktiert werden.

Falls gewünscht, können zur Modifizierung der Verarbeitungs- und Härtungseigenschaften auch die auf diesem Gebiet üblichen und allgemein bekannten Modifizierungsmittel wie übliche Füll- und/oder Versteifungsmaterialien, Pigmente, Farbstoffe, Beschleuniger, Benetz- und Verlaufsmittel, reaktive Verdünner, Härtungsmittel mitverwendet werden. Als Verstärkungsmaterialien werden die üblichen Glasfasern bevorzugt eingesetzt.

Als übliche Härtungsmittel werden insbesondere die cycloaliphatischen Amine wie beispielsweise Isophorondiamin, 1,2-Diaminocyclohexan, 4,4'-Diamino-3,3'-dimethyldicylohexylmethan mitverwendet.

Als erfindungsgemäss mitverwendbare Reaktiwerdünner werden Glycidylether auf Basis von alicyclischen Alkoholen wie 1,4-Dimethylolcyclohexan und aliphatischen Alkoholen, insbesondere 2- oder 3-wertigen aliphatischen Alkoholen mit 4 - 8 C-Atomen wie Butandiole, Hexandiole, Oktandiole, Glycerin, welche durch Addition von Ethylenoxid oder Propylenoxid verlängert sein können sowie Glycidylether auf Basis von Phenol oder Kresol bevorzugt.

Die Menge der reaktiven Verdünner liegt in der Regel zwischen 5 - 10, vorzugsweise 6 - 8 Gew.-%, bezogen auf das Epoxidharz a).

Aufgrund der relativ langen Tecam-Zeit der erfindungsgemäss mitverwendeten Härter ist es durch gezielte Zugabe von auf diesem Gebiet üblichen Beschleunigern möglich, Topfzeiten massgeschneidert einzustellen.

Als Beschleuniger können beispielsweise tertiäre Amine, wie solche auf Basis von Phenol-Formaldehyd-Kondensationsprodukten eingesetzt werden.

Die vergleichsweise hohen Viskositäten der erfindungsgemäss mitverwendeten Härter ermöglichen es, die Verarbeitungsviskosität ebenfalls individuell den Forderungen der Praxis anzupassen. Bei heizbaren Tränkbädern und Wickelkernen kann dies einfach durch eine entsprechende Temperaturwahl erfolgen, bei anderen nichtheizbaren Kernen durch Mitverwendung von reaktiven Verdünnern. Dadurch ist eine stufenlose Einstellung möglich, wodurch eine optimale Benetzung des Verstärkungsmaterials erzielt werden kann, ohne dass das Bindemittel während des Wickelvorganges, d.h. beim Aufbau des Wickelkörpers, ausgequetscht wird und abtropft. Neben der Reduzierung von Bindemittelverlusten kann auch der Aufbau des Wickelkörpers gleichmassiger erfolgen.

Bei der Rohrfertigung nach dem Wickelverfahren werden mit Bindemittel versehene Endlosfasern kontinuierlich auf einem rotierenden, den Rohrinnendurchmesser bestimmenden Kern abgelegt. Der Aufbau der Rohrwandung erfolgt dabei schichtweise, indem die imprägnierten Fasern zunächst, wie bei einer Spule, über die gesamte Rohrlänge nebeneinander abgelegt werden, ehe die nächste Lage in gleicher Weise darüber gewickelt wird. Die Dicke der Wicklung und der Ablegewinkel der Fasern senkrecht zur Rohrachse ist abhängig von dem späteren Rohrinnendruck, wobei jedoch aus fertigungstechnischen Gründen zwei aufeinanderfolgende Lagen stets einen leicht unterschiedlichen Wickelwinkel aufweisen. Nach Erreichung der gewünschten Rohrwandungsdicke wird der Wickelkörper nebst Kern zur Aushärtung des noch flüssigen Bindemittels einer Wärmebehandlung unterzogen und anschliessend vom Kern entformt.

Zur Herstellung qualitativ hochwertiger Rohre im Wickelverfahren ist es wichtig, dass das Bindemittel die Verstärkungsfasern möglichst vollständig benetzt, ohne dass infolge zu geringer Tränkviskosität jedoch ein abtropfen des Bindemittels von dem im Aufbau befindlichen Wickelkörper eintritt. Weiterhin muss das Harzsystem eine ausreichend lange Gelierungszeit aufweisen, damit die eine Wickellage nicht schon ausreagiert ist, ehe die noch folgende Lage aufgetragen ist, was eine nachteilige Schwächung des gesamten Wickelverbundes zur Folge haben würde. Ausserdem erschwert eine kurze Gelierungszeit des Harzsystems den gesamten Fertigungsprozess, da sie die Verwendung von einfach zu handhabenden Tränkbädern für den Bindemittelauftrag auf die Verstärkungsfasern ausschliesst und stattdessen eine kontinuierliche Bindemitteldosierung erforderlich macht, mit der jedoch auch die Gefahr von Dosier- und Mischfehlern erheblich steigt. Da aber andererseits der Wickelkörper nach der Fertigstellung unter Temperatureinwirkung möglichst schnell ausreagieren soll, sollte die Gelierungszeit der Dauer des jeweiligen Wickelvorgangs möglichst optimal anpassbar sein.

Wie Tabelle 1 zeigt, liegt die Gelierungszeit der Bindemittelsysteme mit den Härtern nach Beispiel 1 und 2 deutlich oberhalb des Vergleichswertes des zur Zeit bevorzugt auf dem Rohrwickelsektor verwendeten Bindemittelsystems mit dem Härter entsprechend Beispiel 3.

Auch die Werte aus dem Zugversuch und das Eigenschaftsniveau bei Temperaturbeanspruchung von Beispiel 1 und insbesondere Beispiel 2 übertreffen bei den bevorzugten Bedingungen von 2 Std./120°C die Daten von Beispiel 3 recht deutlich, insbesondere die hohen Übergangstemperaturen von 182°C bzw. 189°C (Beispiel 1 und 2) gegenüber 158°C (Beispiel 3) verdienen Erwähnung.

Von besonderer Bedeutung ist die Veränderung des Eigenschaftsniveaus der Bindemittelsysteme bei gleichmässiger Temperatur und Wassereinwirkung wie sie aus Tabelle 2 anhand der Veränderung der HDT-Werte nach unterschiedlich langer Lagerung in kochendem Wasser deutlich wird.

Wie Tabelle 2 für Beispiel 4 zeigt, sinkt der HDT-Wert für mit üblichen Imidazolinen gehärteten Bindemittelsystemen bei dieser Beanspruchung nach 7-tägiger Temperatur und Wassereinwirkung stark ab.

Bei den erfindungsgemäss mitverwendeten Imidazolinaddukten nach Beispiel 1 und 2 ist demgegenüber der Rückgang des HDT bei Einwirkung von kochendem Wasser sehr begrenzt.

Die vorgängig beschriebenen erfindungsgemässen härtbaren Zusammensetzungen können auch zur Herstellung von Teilen verwendet werden, die aufgrund der gewünschten Form des Teiles nicht unmittelbar nach dem Wickelverfahren herstellbar sind.

Ein weiterer Gegenstand ist daher die Verwendung einer härtbaren Zusammensetzung, enthaltend
a) ein flüssiges Epoxidharz mit Epoxidwerten von 0,40 bis 0,65,
b) ein Addukt eines Triethylentetraminimidazolins mit einem Glycidylether der mehr als eine Epoxidgruppe pro Molekül aufweist, zur Herstellung von Rohrleitungshilfsstücken für Rohrleitungssysteme und Behälter aus Verbundwerkstoff, insbesondere für Brauch- und Trinkwasser.

### Beispiele

### Beispiel 1

146 g (1 Mol) Triethylentetramin werden im Reaktionsgefäss vorgelegt. Unter Rühren werden 74 g (1 Mol) Propionsäure innerhalb von ca. 1 Std. so zugegeben, dass eine homogene Mischung entsteht. Die Temperatur steigt dabei bis etwa 80°C. Nach Beendigung der Zugabe wird aufgeheizt; ab ca. 160°C beginnt die Kondensation. Die Temperatur wird langsam auf 270°C erhöht und bei dieser Temperatur gehalten, bis kein Destillat mehr übergeht. Es fallen etwa 34 g Destillat an. Der Imidazolingehalt - ermittelt durch Infrarotspektroskopie - beträgt etwa 80 %.

Nach Abkühlen des Produktes auf ca. 60°C werden zu den im Reaktionsgefäss verbliebenen 186 g (≈1 Mol) des Imidazolines 38 g (0,2 Epoxidäquivalent) eines Bisphenol-A-diglycidylethers mit einem Epoxidwert von ca. 0,525 Äquivalent/100g innerhalb von 30 min. unterrühren zugegeben.

Das entstandene Reaktionsprodukt weist folgende Kennzahlen auf: Viskosität bei 25°C: 2150 mPa•s; Aminzahl : 952 mg KOH/g.

### Beispiel 2

Gemäss Beispiel 1 wird ein Imidazolinaddukt aus 146 g (1 Mol) Triethylentetramin, 60 g (1 Mol) Essigsäure und 38,8 (0,2 Epoxidäquivalent) eines Bisphenol-F-diglycidylethers mit einem Epoxidwert von 0,61 Äquivalent/100g hergestellt.

### Beispiel 3

Handelsübliches Isophorondiamin.

### Beispiel 4

Gemäss Beispiel 1 wird ein Imidazolin aus 103 g Diethylentetramin (1 Mol) und 74 g Propionsäure (1 Mol) hergestellt.

### Prüfungsdurchführung:

Zur Ermittlung des mechanischen Eigenschaftsniveaus werden bei Beispiel 1, 2 und 4 jeweils 15 Gew.-Teile Härter, respektive 25 Gew.-Teile Härter bei Beispiel 3 mit jeweils 100 Gew.-Teilen eines niedrigviskosen Epoxidharzes auf Bisphenol A-Basis (Epoxidwert: 0,54) vermischt und in einem Stahlwerkzeug in 2 Stunden bei 120°C zu 4 mm dicken, planen Formteilen ausgehärtet. Aus diesen Formteilen werden dann durch Sägen bzw. Fräsen Probekörper entnommen, an denen unter Einhaltung der jeweiligen Prüfnormen die in nachstehender Tabelle 1 aufgeführten Eigenschaftswerte ermittelt sind. Die bei den verschiedenen Prüfungen benutzten Prüfkörperabmessungen sind für einen 3-Pkt.-Biegeversuch: 80 x 10 x 4 mm; einen Zugversuch: Schalterhub Nr. 3 nach DIN 53455; HDT: 120 x 10 x 4 mm.

**Tabelle 1**

| Eigenschaften der Bindemittelsysteme nach Härtung von 2h bei 120°C: | | | | |
|---|---|---|---|---|
| Eigenschaft | Beispiel 1 | Beispiel 2 | Beispiel 3 | Beispiel 4 |
| Tecam-Gelierungszeit: 250 g bei 23°C [min] | 200 | 185 | 115 | 280 |
| Biegefestigkeit [N/mm²] | 100 | 112 | 102 | 97 |
| Zugfestigkeit [N/mm²] | 64 | 69 | 45 | 49 |
| Dehnung (DIN 53455) [%] | 3,0 | 2,8 | 1,9 | 3,8 |
| Heat distance Temperature [°C] | 135 | 137 | 123 | 125 |
| Übergangstemperatur [°C] (DIN 53445) | 182 | 189 | 158 | 145 |

**Tabelle 2**

| HDT-Werte verschiedener Bindemittelsysteme nach Lagerung in kochendem Wasser: | | | | | |
|---|---|---|---|---|---|
| | Lagerzeit in kochendem Wasser | | | | |

| | 0-Wert | 1 Tag | 2 Tage | 3 Tage | 7 Tage |
|---|---|---|---|---|---|
| Beispiel 1 | 135 | 129 | 129 | 127 | 127 |
| Beispiel 2 | 137 | 132 | 133 | 131 | 130 |
| Beispiel 3 | 123 | 118 | 118 | 117 | 117 |
| Beispiel 4 | 125 | 110 | 101 | 95 | 80 |

**Tabelle 3**

| H₂O-Aufnahme bei 100° - H₂O-Lagerung: | | | | |
|---|---|---|---|---|
| | Lagerzeit in Tagen | | | |
| | 1 Tag | 2 Tage | 3 Tage | 7 Tage |
| Beispiel 1 | 2,2 % | 2,5 % | 3,1 % | 3,6 % |
| Beispiel 2 | 2,3 % | 2,7 % | 3,4 % | 3,9 % |
| Beispiel 3 | 1,8 % | 2,0 % | 2,4 % | 2,8 % |
| Beispiel 4 | 2,9 % | 3,8 % | 4,5 % | 5,8 % |

## Patentansprüche

1. Verfahren zur Herstellung von Rohren und Rohrhilfsstücken für Rohrleitungssysteme aus Verbundwerkstoff, insbesondere für Brauch- und Trinkwasser, hergestellt nach dem Wickelverfahren mit Bindemitteln auf Basis von Epoxidharzen, welche im Durchschnitt mehr als eine Epoxidgruppe im Molekül enthalten, und Härtungsmitteln für die Epoxidharze, unter Mitverwendung von üblichen Hilfs- und Zusatzstoffen, **dadurch gekennzeichnet,**
**dass** als Bindemittel eine härtbare Zusammensetzung, enthaltend
a) ein flüssiges Epoxidharz mit Epoxidwerten von 0,40 bis 0,65,
b) ein Addukt eines Triethylentetraminimidazolins mit einem Glycidylether der mehr als eine Epoxidgruppe pro Molekül aufweist, verwendet wird.

2. Verfahren gemäss Anspruch 1, **dadurch gekennzeichnet, dass** als Epoxidharz a) ein flüssiges Bisphenol A- und/oder Bisphenol F-Harz verwendet wird.

3. Verfahren gemäss einem der Ansprüche 1 und 2, **dadurch gekennzeichnet, dass** das Epoxidharz a) einen Epoxidwert von 0,45 bis 0,65, bevorzugt von 0,50 bis 0,61, aufweist.

4. Verfahren gemäss einem der Ansprüche 1 bis 3, **dadurch gekennzeichnet, dass** ein reaktiver Verdünner mitverwendet wird.

5. Verfahren gemäss einem der Ansprüche 1 bis 4, **dadurch gekennzeichnet, dass** als Carbonsäure zur Herstellung des Triethylentetraminimidazolins eine niedere aliphatische Carbonsäure mit 2 bis 4 C-Atomen verwendet wird.

6. Verfahren gemäss Anspruch 5, **dadurch gekennzeichnet, dass** als Carbonsäure Essigsäure und/oder Propionsäure verwendet wird.

7. Verfahren gemäss Anspruch 1, **dadurch gekennzeichnet, dass** zur Adduktierung des Triethylentetraminimidazolins b) ein Diglycidylether von Bisphenol-A und/oder Bisphenol-F verwendet wird.

8. Verfahren gemäss einem der Ansprüche 1 bis 7, **dadurch gekennzeichnet, dass** pro Mol des Triethylentetraminimidazolins 0,05 bis 0,5, bevorzugt 0,15 bis 0,30 Epoxidäquivalente des Epoxidharzes zur Adduktbildung eingesetzt werden.

9. Verfahren gemäss Anspruch 1, **dadurch gekennzeichnet, dass** der Imidazolingehalt des Triethylentetraminimidazolins mindestens 50 Mol%, bevorzugt mindestens 70 Mol%, beträgt.

10. Verwendung einer härtbaren Zusammensetzung, enthaltend
a) ein flüssiges Epoxidharz mit Epoxidwerten von 0,40 bis 0,65,
b) ein Addukt eines Triethylentetraminimidazolins mit einem Glycidylether der mehr als eine Epoxidgruppe pro Molekül aufweist, zur Herstellung von Rohren und Rohrhilfsstücken für Rohrleitungssysteme und Behälter aus Verbundwerkstoff, insbesondere für Brauch- und Trinkwasser.

## Claims

1. Method for producing pipes and pipe auxiliary components for pipeline systems from composite material, especially for service water and drinking water, produced by the winding process with binders based on epoxy resins containing on average more than one epoxide group in the molecule, and on curing agents for the epoxy resins, with the concomitant use of conventional auxiliaries and additives, **characterised in that** as the binder a curable composition is used containing a) a liquid epoxy resin having epoxide values of from 0.40 to 0.65 and b) an adduct of a triethylenetetraminoimidazoline with a glycidyl ether having more than one epoxide group per molecule.

2. Method according to claim 1, **characterised in that** a liquid bisphenol A resin and/or bisphenol F resin is used as the epoxy resin a).

3. Method according to either claim 1 or claim 2, **characterised in that** the epoxy resin a) has an epoxide value of from 0.45 to 0.65, preferably of from 0.50 to 0.61.

4. Method according to any one of claims 1 to 3, **characterised in that** a reactive diluent is also used.

5. Method according to any one of claims 1 to 4, **characterised in that** a low aliphatic carboxylic acid having 2 to 4 carbon atoms is used as the carboxylic acid for preparing the triethylenetetraminoimidazoline.

6. Method according to claim 5, **characterised in that** acetic and/or propionic acid is used as the carboxylic acid.

7. Method according to claim 1, **characterised in that** a diglycidyl ether of bisphenol A and/or bisphenol F is used for adducting the triethylenetetraminoimidazoline b).

8. Method according to any one of claims 1 to 7, **characterised in that** from 0.05 to 0.5, preferably 0.15 to 0.30, epoxide equivalents of the epoxy resin are used for adduct formation per mole of the triethylenetetraminoimidazoline.

9. Method according to claim 1, **characterised in that** the imidazoline content of the triethylenetetraminoimidazoline is at least 50 mol %, preferably at least 70 mol %.

10. Application of a curable composition containing a) a liquid epoxy resin having expoide values of 0.40 to 0.65 and b) an adduct of a triethylenetetraminoimidazoline with a glycidyl ether having more than one epoxide group per molecule, for producing pipes and pipe auxiliary components for pipeline systems and containers from composite material, especially for service water and drinking water.

## Revendications

1. Procédé pour fabriquer des tuyaux et des bouts auxiliaires de tuyau pour des systèmes de conduite à base de matériau composite, en particulier pour de l'eau industrielle et de l'eau potable, fabriqués selon le procédé d'enroulement avec des liants à base de résines époxy, qui contiennent en moyenne plus d'un groupe époxy dans la molécule, et des moyens de durcissement pour les résines époxy avec l'utilisation commune de produits auxiliaires et de produits additifs classiques, **caractérisé en ce que**, comme liant, on utilise une composition durcissable, contenant
a) une résine époxy liquide avec des valeurs époxy de 0,40 à 0,65,
b) un produit d'addition d'un imidazoline de triéthylènetétramine avec un éther de glycidyle qui présente plus d'un groupe époxy par molécule.

2. Procédé selon la revendication 1, **caractérisé en ce que**, comme résine époxy, on utilise a) une résine liquide de bisphénol-A et/ou de bisphénol-F.

3. Procédé selon l'une quelconque des revendications 1 et 2, **caractérisé en ce que** la résine époxy présente a) une valeur époxy de 0,45 à 0,65, de préférence de 0,50 à 0,61.

4. Procédé selon l'une quelconque des revendications 1 à 3, **caractérisé en ce qu'**on utilise également un diluant réactif.

5. Procédé selon l'une quelconque des revendications 1 à 4, **caractérisé en ce que**, comme acide carboxylique, pour la fabrication de l'imidazoline de triéthylènetétramine, on utilise un acide carboxylique aliphatique faible avec 2 à 4 atomes de carbone.

6. Procédé selon la revendication 5, **caractérisé en ce que**, comme acide carboxylique, on utilise de l'acide acétique et/ou de l'acide propionique.

7. Procédé selon la revendication 1, **caractérisé en ce que**, pour l'addition de l'imidazoline de triéthylènetétramine, on utilise un éther de diglycidyle de bisphénol-A et/ou de bisphénol-F.

8. Procédé selon l'une quelconque des revendications 1 à 7, **caractérisé en ce que**, par mole d'imidazoline de triéthylènetétramine, on utilise de 0,05 à 0,5, de préférence de 0,15 à 0,30, d'équivalent époxy de la résine époxy pour la formation du produit d'addition.

9. Procédé selon la revendication 1, **caractérisé en ce que** la teneur en imidazoline de l'imidazoline de triéthylènetétramine représente au moins 50 % en moles, mais de préférence au moins 70 % en moles.

10. Utilisation d'une composition durcissable contenant
a) une résine époxy liquide avec des valeurs époxy de 0,4 à 0,65,
b) un produit d'addition d'un imidazoline de triéthylènetétramine avec un éther de glycidyle qui présente plus d'un groupe époxy par molécule, pour la fabrication de tuyaux et de bouts auxiliaires de tuyau pour des systèmes de conduite et des récipient à base de matériau composite, en particulier pour de l'eau industrielle et de l'eau potable.
